# EUROPÄISCHE PATENTSCHRIFT

(11) **EP 1 981 629 B1**
(45) Veröffentlichungstag und Bekanntmachung des Hinweises auf die Patenterteilung: **16.10.2013**
(21) Anmeldenummer: 07711373.6
(22) Anmeldetag: 23.01.2007
(51) Int. Cl.: B01J 13/08, B01J 13/20

(54) **IPBC HALTIGE KOAZERVATE**
IPBC-CONTAINING COACERVATES
CO-ACERVAT CONTENANT IPBC

(30) Priorität: 01.02.2006 DE 102006004526
(43) Veröffentlichungstag der Anmeldung: 22.10.2008
(73) Patentinhaber: LANXESS Deutschland GmbH, 50569 Köln (DE)
(72) Erfinder: UHR, Hermann, 51373 Leverkusen (DE); RUDHARDT, Daniel, 50823 Köln (DE); RIDDER, Frank, 51515 Kürten (DE); KIJSTRA, Johan, 51519 Odenthal (DE); PLUG, Sascha, 51381 Leverkusen (DE)
(86) Internationale Anmeldenummer: PCT/EP2007/000521
(87) Internationale Veröffentlichungsnummer: WO 2007/087994

(56) Entgegenhaltungen:
- EP-A- 0 824 862
- EP-A- 1 297 824
- WO-A-00/57702
- DE-A1- 19 644 224

## Beschreibung

Die Erfindung betrifft ein Verfahren zur Koazervierung von Iodpropargylverbindungen, stabile wässrige Dispersionen aus koazervierten Iodpropargylverbindungen und deren Verwendung zum Schutz von technischen Materialien, Mischungen mit weiteren bioziden Wirkstoffen, Verfahren zur Herstellung dieser Mischungen und fungizide Mittel auf Basis koazervierter Ioapropargylverbindungen

Iodpropargylverbindungen sind bekannte Wirkstoffe, die besonders im Materialschutz dazu eingesetzt werden, technische Materialien wie Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können vor dem Befall, besonders durch Pilze zu schützen Bekanntester Vertreter ist IPBC (Iodpropargylbutylcarbamat) IPBC ist kommerziell erhältlich, entweder in fester Form, aber auch in diversen Flüssigkonzentraten, die aber meist organische Lösungsmittel enthalten. Der Bedarf an Formulierungen die keinen oder nur einen geringen geringen Gehalt an VOC (volatile organic compound) aufweisen ist in den letzten Jahren aber stark gestiegen. Hier bieten sich wässrige Suspensionen an Bislang im Handel befindliche wassrige IPBC Suspensionen weisen aber eine schlechte Lagerstabilitat auf, weil es durch Kristallbildung schnell zu einem starken Anstieg der Viskosität, bei deutlich verschlechterter Verarbeitkeit kommt. Grund hierfür ist eine geringe Wasserloslichkeit des Wirkstoffes, was in wässrigen Systemen dazu führt, dass große Teilchen auf Kosten kleiner Teilchen wachsen. Dieses fuhrt bei der Lagerung, besonders bei hoheren Temperaturen zum Entstehen großer Kristalle, verbunden mit teilweise massiver Sedimentation oder Erhohung der Viskositat Dieser Vorgang nennt sich "Ostwald'sche Reifung" und ist in der Literatur ausfuhrlich beschrieben (siehe Formuliertechnik, H.Mollet u. A Grubemann, Wiley-VCH, Weinheim 2000, S 320 - 322).

Des Weiteren lassen sich nur schwer Formulierungen herstellen, die neben IPBC noch weitere Wirkstoffe enthalten. Besonders bei der Herstellung von Suspoemulsionen kommt es haufig zu stark ausgepragter Heteroflocculation, die zum Verklumpen und somit zu einer starken Verminderung der Stabilitat der Formulierung fuhrt.

Es wurde nun gefunden, dass man die Kristallisation (Ostwald'sche Reifung) in wässrigen Iodpropaigyl-haltigen Formulierungen und Zubereitungen deutlich verlangsamen kann und die Kompatibilität von Iodpargylverbindungen mit anderen Wirkstoffen deutlich erhöhen kann, indem man die Iodpropargylverbindungen mit einer Koazervathulle umgibt, die gegebenenfalls noch vernetzt sein kann Außerdem wurde gefunden, dass die biologische Wirkung in den Anwendungsformen hierdurch nicht beeinflusst wird

Der Begriff Koazervierung ist in der Fachliteratur bekannt und meint generell das Niederschlagen eines hydrophilen kolloiden Materials auf festen Materialien, Losungen oder Schmelzen

Es sind bereits wässrige Dispersionen bekannt geworden, die Iodpropargylverbindungen und als Formulierhilfmittel partiell hydrolysierten Polyvinylalkohol enthalten, und durch deren Einsatz das Kristallwachstum in Formulierungen vermindert werden sollen. (vgl. WO 00/57702).

Die Methode der Koazervierung ist in der Literatur breit beschrieben und besonders zur Herstellung von "slow release Formulierungen" breit auch auf Wirkstoffe angewendet worden. Eine Verhinderung von Ostwaldscher Reifung, besonders bei Iodpropargylverbindungen ist nicht beschrieben Ein Einsatz von Koazervaten zur Verhinderung von Heteroflocculation in Formulierungen ist ebenfalls nicht beschrieben.

Ein haufig genutzter Weg zur Verkapselung von flüssigen oder festen Wirkstoffen in Suspension bzw. Emulsion ist die einfache oder komplexe Koazervierung. Die grundlegenden physikalischen und chemischen Prozesse bei diesen beiden Verkapselungsmethoden sind gut verstanden und ausfuhrlich in der Literatur beschrieben. In der Patentliteratur ist sowohl die Methode der komplexen Koazervierung (vgl z.B GB-A 1475229 und US-A 2,800,458) als auch die der einfachen Koazervierung beschrieben (vgl. z B. GB-A 1275712.

Das grundlegende Prinzip bei dieser Mikroverkapselungsmethode ist die Phasenseparation eines oder mehrerer geloster Polymere aus einer ursprunglichen wässrigen Losung und die Anlagerung der so entstehenden Koazervate an die Grenzflache von suspendierten oder emulgierten Teilchen.

Bei der einfachen Koazervierung induziert man die Phasenseparation in einer wässrigen Lösung eines Polymers. Dies kann prinzipiell mit jeder wässrigen Polymerlösung realisiert werden, in dem man die richtige Bedingung von pH, Lösungsmittel, oder Salzkonzentration wahlt. Typische Beispiele sind Gelatine/Wasser/Ethanol- oder Gelatine/Wasser/Natnumsulfat-Lösungen, in denen die Entstehung von Koazervaten durch Verändern der Salzkonzentration bzw. durch Änderung der Menge an organischem Lösungsmittel gesteuert wird

Eine komplexe Koazervierung kann mit mehreren gelosten Polyelektrolyten unterschiedlicher Nettoladung realisiert werden, indem man den pH-Wert oder die Salzkonzentration des Systems geeignet wählt. Dadurch können sich dann unterschiedlich geladene Polyelektrolyte anziehen und gemeinsam als Komplex ausfallen. Eine typische Kombination und das am meisten untersuchte System von Polyelektrolyten ist Gelatine und Gummi Arabicum

Koazervathüllen können nachträglich chemisch vernetzt werden, was Ihnen eine hohe mechanische Stabilität verleiht Gelatine/Gummi Arabicum Koazervate können beispielsweise mit Glutardialdehyd, Formaldehyd oder durch Komplexierung mit Metallkationen vernetzt werden.

Gegenstand der vorliegenden Erfindung ist ein Verfahren zur Koazervierung von Iodpropargylverbindungen das dadurch gekennzeichnet ist, dass man
a) eine wässrige Losung welche eine oder mehrere hydrophile Kolloide enthalt mit mindestens einer Iodpropargylverbindung vermischt und
b) durch Zugabe von Koazervierungshilfsmitteln oder durch Ändern der Umgebungsbedingung die hydrophilen Kolloide auf der Partikeloberfläche der Iodpropargylverbindungen ausfallt oder abscheidet und
c) die Koazerviathülle der Iodpropargylverbindungen gegebenenfalls vernetzt.

Bei den hydrophilen Kolloiden handelt es sich bevorzugt um Polymere, die ionisierbar sind und in Mischungen untereinander mit unterschiedlichen elektrischen Ladungen vorliegen können und die somit amphotere Eigenschaften aufweisen Als Kolloide sind sowohl solche geeignet, die zu einer einfachen Koazervierung fuhren als auch solche, die zu einer komplexen Koazervierung fuhren. Fur die Durchführung des erfindungsgemaßen Verfahren geeignete hydrophile Kolloide sind insbesondere Gelatine; Agar-Agar, Albumin, Cellulosederivate, Carragenan, Chitosan, Sojaprotein, Polyvinylalkohol, Gliadin, Stärke, oder, im Falle der komplexen Koazervierung, die Kombinationen aus Gelatine/Gummi Arabicum, Gelatine/Acacia, Gelatine/Pectin, Gelatine/Carbopol, Heparin/Gelatine, Gelatine/Carboxymethylcellulose, B-Lactoglobulin/Gummi Arabicum oder Guar/Dextran

Ganz besonders bevorzugt setzt man zur Durchführung des erfindungsgemäßen Verfahrens als hydrophile Kolloide Gelatine oder Gelatine/Gummi Arabicum Mischungen ein.

Bei der Durchführung des erfindungsgemaßen Verfahrens geht man im allgemeinen so vor, dass man zunächst eine wässrige Losung eines oder mehrerer hydrophiler Kolloide herstellt Dabei kann die Konzentration der eingesetzten hydrophilen Kolloide in einem breiten Bereich variiert werden Im allgemeinen werden 0,05 bis 30 Gew -% an mindestens einem Kolloid bezogen auf die wassnge Losung eingesetzt. Bevorzugt werden 0,2 bis 20 Gew -% und besonders bevorzugt 0,5 % bis 15 Gew.- % an hydrophilem Kolloid bezogen auf die wässrige Losung eingesetzt. In dieser Kolloid-Losung wird die zu koazervierende Iodpropargylverbindung emulgiert, bzw suspendiert. Dieses kann durch Ruhren und Mahlen geschehen Es ist aber auch moglich die Kolloid-Lösung zu der zu koazervierenden Iodpropargylverbindung hinzuzugeben. Dabei kann die Iodpropargylverbindung, abhangig von der gewahlten Temperatur, als Feststoff oder als Schmelze vorliegen.

Die zu koazervierende Iodpropargylverbindung wird im allgemeinen in einer Konzentration von 0,5 bis 50 Gew.-% bezogen auf die wässrige Losung eingesetzt Bevorzugt werden 1 bis 40 Gew - % und besonders bevorzugt 2 bis 30 Gew.-% der Iodpropargylverbindung, jeweils bezogen auf die wässrige Losung, eingesetzt.

Die Temperatur zur Durchführung des erfindungsgemaßen Verfahrens kann in einem breiten Bereich variiert werden Im Allgemeinen wird in Schritt a) die Mischung, insbesondere Emulsion oder Suspension, aus hydrophilem Kolloid und Iodpropargylverbindung bei einer Temperatur von 0 bis 90 °C hergestellt

Bevorzugt stellt man die Emulsion oder Suspension bei einer Temperatur von 10 °C bis 80 °C und besonders bevorzugt bei einer Temperatur von 15 bis 70 °C her

Bei Verwendung eines oder mehrerer für die einfache Koazervierung geeigneten hydrophilen Kolloids wird im allgemeinen ein saurer pH-Wert, besonders bevorzugt ein pH-Wert von 3 bis 5 eingestellt Dieses kann durch alle üblichen organischen oder anorganischen Sauren erfolgen, bevorzugt durch Salzsaure, Schwefelsaure, Phosphorsäure, Citronensaure, Essigsaure, Ameisensaure Die Sauren werden in einer Menge eingesetz, die zur Einstellung des gewünschten pH-Wertes erforderlich ist

In einigen Fallen, wie beispielweise der komplexen Koazervierung mit Gummi Arabicum als eingestztem Kolloid kann es aus Löslichkeitsgründen notig sein, zunächst einen alkalischen pH-Wert einzustellen, vor der eigentlichen Koazervierung den pH-Wert aber wieder sauer einzustellen.

Der Koazervierungsschritt b) des erfindungsgemäßen Verfahrens geschieht dann durch Zugabe von Koazervatierungshilfsmitteln und/oder durch Andern der Umgebungsbedingung. Hierdurch weiden die hydrophilen Kolloide dann auf der Partikeloberflachen der Iodpropargylverbindungen ausgefallt bzw abgeschieden Unter der Änderung der Umgebungsbedmgunge ist zum Beispiel Temperaturerniedrigung oder Änderung des pH-Werts zu verstehen.

Als Koazervierungshilfsmittel sind im Sinne der vorliegenden Erfindung Salze, Polyelekrolyte, Alkohole, Aceton und Polyethylenglykol oder deren Kombinationen zu verstehen

Besonders bevorzugt wird bei der Durchführung des erfindungsgemaßen Verfahrens die Koazervierung durch Zugabe von Salzen, Erhöhung des pH-Wertes oder Erniedrigung der Temperatur oder Kombinationen hieraus durchgeführt.

Als Salze eigenen sich prinzipiell alle anorganischen Salzen Bevorzugt setzt man aber Salze aus den Kationen Natrium, Kalium, Rubidium, Caesium Ammonium oder Lithium und den Anionen Sulfat, Citrat, Tartrat, Formiat, Acetat, Bromid, Phosphat, Carbonat oder Chlorid ein. Besonder bevorzugt seien genannt Natriumsulfat, -citrat, -tartrat, -acetat, -chlond, Kaliumsulfat, -citrat,-tartrat, -acetat, -chlorid Die Zugabe der Salze erfolgt vorzugsweise in Form von wässrigen Lösungen bei einer Temperatur im Berich von 0 bis 50 °C. Die Konzentration der Salzlosung kann in einem breiten Bereich variiert werden. Ermittelt werden kann diese Konzentration beispielsweise dadurch, dass man die Salzlosung zu der Losung des hydrophilen Kolloidmaterials, welche noch keine Iodpropargylverbindung enthalt gibt. Die Konzentration, bei der Trubung eintritt ist die richtige Salzkonzentration für die Koazervierung. Im Allgemeinen beträgt die Konzentration von 0,005 bis 10 Gew -% bezogen auf die zu koazervierende Lösung.

Eine Koazervierung durch Erhohung des pH-Wertes kann durch Zugabe einer alkalischen Losung erfolgen Bevorzugt wird durch Zugabe einer wässrigen Natriumhydroxyd-, Kaliumhydroxyd, Lithiumhydroxyd-, Natriumcarbonat- oder Kaliumcarbonatlösungein pH-Wert von >= 10.eingestellt. Die Zugabe der alkalischen Losung erfolgt im allgemeinen bei einer Temperatur im Berich von 0 bis 50 °C.

Eine Koazervierung durch Temperaturerniedrigung kann dadurch erfolgen, dass die Emulsion oder Suspension abgekühlt wird. Entweder durch äußere Kuhlung oder vermischen mit einem kalteren Medium, wie z.B Eiswasser. Die Temperatur wird dabei von 0 °Cbis 90°C auf -5 bis 10 °C abgesenkt.

Die erhaltenen Koazervate können entweder direkt in dem Medium benutzt werden, in dem sie koazerviert wurden, es ist aber auch moglich die Teilchen zu Isolieren und zu reinigen. Eine Isolierung der Koazervate ist möglich durch Filtration, Zentrifugieren oder Digerieren. Weiterer Gegenstand der vorliegenden Erfindung sind daher die nach dem erfindungsgemaßen Verfahren hergestellten koazervierten Iodpropargylverbindungen.

Die Koazervate werden im allgemeinen dispergiert in wässrigen Systemen eingesetzt, es ist aber auch moglich die Koazervate in fester Form zu isolieren.

Ganz besonders bevorzugt lassen sich Iodpropargylverbindungen koazervieren indem man mit einer Emulsion bei einer Temperatur oberhalb der Schmelztemperatur der jeweiligen Iodpropargylverbindungen, in einem Bereich von 65°C-90°C bei einem pH-Wert im Bereich von 3 - 5 startet. Als Polymer verwendet man bevorzugt Gelatine (einfache Koazervierung) oder die Kombination Gelatine/Gummi Arabicum (komplexe Koazervierung). Die Koazervierung erfolgt durch Erniedrigung der Temperatur auf 0°C - 10°C allein oder/und spaterer Änderung des pH-Werts auf >10 bei die komplexe Koazervierung

Ganz besonders bevorzugt arbeitet man mit einer 4 %igen Iodpropargylverbindung-Wasser-Emulsion die man mit 25%iger Gelatine-Lösung (0,45 g Gelatine pro g Iodpropargylverbindung) versetzt und bei 40 °C den pH-Wert mit einer 0,1 mol/l HCl auf 4,5 einstellt. Bei einer Temperatur von 70 °C wird die Emulsion mit einem Ultraschallfinger (Tip 5mm, 2*15 s, 35 %) dispergiert. Die Koazervierung erfolgt durch Erniedrigung der Temperatur in dem die Emulsion in Eiswasser mit einem Ultraturrax (9000 min-1) dispergiert wird und die Temperatur dabei auf 0 °C gesenkt wird.

Fur die komplexe Koazervierung erfolgt vor der Zugabe von Gummi Arabicum eine pH-Erhöhung auf 10 mit einer 0,5 mol/l NaOH und eine Temperaturerhohung auf 45°C. Nach Zugabe von warmer 25 %iger Gelatine-Losung wird der pH-Wert mit einer 0,5mol/l HCl auf 4 erniedrigt und unter Ruhren erfolgt die Abkuhlung auf Raumtemperatur. Die Aushärtung der Kapseln erfolgt innerhalb von 2h in einem Eisbad

Die Koazervathullen der nach dem erfindungsgemäßen Verfahren hergestellten koazervierten Iodpropargylverbindungen können gegebenenfalls vernetzt werden, wodurch in einigen Fällen die Stabilität der Koazervate erhöht werden kann Die Vernetzung der Koazervathüllen wird im Allgemeinen durch Umsetzung mit Aldehyden oder durch Komplexierung mit Metallkationen durchgeführt, indem man diese Substanzen nachträglich zu den Koazervaten hinzugibt Nach einer Reaktionszeit von 16 - 96 Stunden werden die vernetzten, koazervierten Iodpropargylverbindungen mit Wasser gewaschen und gegebenenfalls durch Filtration, Zentrifugation oder Digerieren isoliert.

Bevorzugt wird die Vernetzung mit Aldehyden, insbesondere mit 1,5-Pentandial (Glutaraldehyd), Methanal (Formaldehyd) durchgeführt Die Konzentration der Aldehyde betragt im allgemeinen 10 Gew.-% bis 100 Gew -% bezogen auf die zu koazervierende Iodpropargylverbindung, vorzugsweise 30 Gew.-% bis 70 Gew.-%.

Die Temperatur für die Vernetzungsreaktion betragt im Allgemeinen von 10°C bis 50 °C, vorzugsweise von 20°C - 30°C.

Die Vernetzungsreaktion wird für einen Zeitraum von 24 bis 72 Stunden unter stetigem Ruhren durchgeführt.

Ganz besonders bevorzugt wird die Vernetzung mit 50 %iger Glutaraldehydlosung (0,5 g Glutaraldehyd pro g Feststoff in Suspension) bei einer Temperatur von 25°C und einer Reaktionsdauer von 48h unter stetigem Schütteln durchgeführt Das überschüssige Glutaraldehyd wird in mehreren Wasch- und Zentnfugierschritten mit Wasser entfernt.

Prinzipiell ist das erfindungsgemaße Verfahren zur Koazervierung auf alle Iodpropargylverbindungen anzuwenden. Bevorzugt dient das Verfahren zur Koazervierung von 3-Iod-2-propynyl-propyl-carbamat, 3-Iod-2-propinyl-butyl-carbamat (IPBC), 3-Iod-2-propinyl-m-chlorphenylcaibamat, 3-Iod-2-propinyl-phenylcarbamat, 3-Iod-2-propinyl-2,4,5-trichlorphenyl-ether, 3-Iod-2-propinyl-4-chlorphenylformal (IPCF), Di-(3-Iod-2-propinyl)hexyldicarbamat, 3-Iod-2-propinyloxyethanol ethyl carbamat, 3-Iod-2-propinyl-oxyethanol-phenyl-carbamat, 3-Iod-2-propinyl-thioxo-thio-ethyl carbamat, 3-Iod-2-propinyl-carbaminsäureester (IPC), N-Iodpropargyloxycarbonyl alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 4-Chlorphenyl-3-iodpropargyl-formal, 3-Iod-2-propinyl-n-hexylcarbamat, 3-Iod-2-propinyl-cyclohexylcarbamat.

Ganz besonders bevorzugt ist die Methode anwendbar auf 3-Iod-2-propinyl-butyl-carbamat (IPBC).

Die erfindungsgemaßen koazervierten Iodpropargylverbindungen eignen sich hervorragend als Biozide zum Schutz von technischen Materialien vor Befall und/oder Zerstorung durch Mikroorganismen.

Weiterer Gegenstand der vorliegenden Erfindung ist die Verwendung von koazervierten Iodpropargylverbindungen Schutz von technischen Matenalien vor Befall und/oder Zerstorung durch Mikroorganismen.

Die erfindungsgemäßen koazervierten Iodpropargylverbindungen eignen sich zum Schutz von technischen Materialien Unter technischen Materialien sind im vorliegenden Zusammenhang nichtlebende Materialien zu verstehen, die für die Verwendung in der Technik zubereitet worden sind. Beispielsweise handelt es sich bei den technischen Materialien um Klebstoffe, Leime, Papier und Karton, Textilien, Leder, Holz, Holzwerkstoffe, Anstrichmittel und Kunststoffartikel, Kuhlschmierstoffe und andere Materialien, die von Mikroorganismen befallen oder zersetzt werden können.

Als Mikroorganismen, die einen Abbau oder eine Veränderung der technischen Materialien bewirken können, seien beispielsweise Bakterien, Pilze, Hefen, Algen und Schleimorganismen genannt Vorzugsweise wirken die erfindungsgemäßen Wirkstoffe gegen Pilze, insbesondere Schimmelpilze, holzverfärbende und holzzerstorende Pilze (Basidiomyceten) sowie gegen Schleimorganismen und Bakterien.

Es seien beispielsweise Mikroorganismen der folgenden Gattung genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Tnchoderma viride,
Escherichia, wie Escherichia coli,
Pseudomonas, wie Pseudomonas aeruginosa,
Staphylococcus, wie Staphylococcus aureus

Weiterhin können die erfindungsgemaßen koazervierten Iodpropargylverbindungen in Abhängigkeit von ihren jeweiligen physikalischen und/oder chemischen Eigenschaften in die üblichen Formulierungen uberfuhrt werden, wie Losungen, Emulsionen, Suspensionen, Pulver, Schaume, Pasten, Granulate, Aerosole und Feinstverkapselungen in polymeren Stoffen.

Diese Formulierungen können in bekannter Weise hergestellt werden, z.B. durch Vermischen der Einzelwirkstoffe mit Streckmitteln, also flüssigen Lösungsmitteln, unter Druck stehenden verflussigten Gasen und/oder festen Tragerstoffen, gegebenenfalls unter Verwendung von oberflachenaktiven Mitteln, also Emulgiermitteln und/oder Dispergiermitteln und/oder schaumerzeugenden Mitteln Im Falle der Benutzung von Wasser als Streckmittel können z.B. auch organische Lösungsmittel als Hilfslösungsmittel verwendet werden. Als flussige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z B Erdolfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser Mit verflüssigten gasformigen Streckmitteln oder Tiagerstoffen sind solche Flüssigkeiten gemeint, welche bei normaler Temperatur und unter Normaldruck gasformig sind, z.B. Aerosol-Treibgase, wie Halogenkohlenwasserstoffe sowie Butan, Propan, Stickstoff und Kohlendioxid. Als feste Trägerstoffe kommen in Frage z B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte naturliche Gesteine wie Calcit, Marmor, Bims, Sepiolith, Dolomit sowie synthetische Granulate aus anorganischen und organischen Mehlen sowie Granulate aus organischem Material wie Sagemehl, Kokosnußschalen, Maiskolben und Tabakstengel Als Emulgier und/oder schaumerzeugende Mittel kommen in Frage. z B. nichtionogene und anionische Emulgatoren, wie Polyoxyethylen-Fettsaureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage z B Lignin-Sulfitablaugen und Methylcellulose.

Es können in den Formulierungen Haftmittel wie Carboxymethylcellulose, naturliche und synthetische pulverige, körnige oder latexformige Polymere verwendet werden, wie Gummiarabicum, Polyvinylalkohol, Polyvinylacetat, sowie naturliche Phospholipide, wie Kephaline und Lecithine, und synthetische Phospholipide. Weitere Additive können mineralische und vegetabile Öle sein

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennahrstoffe, wie Salze von Eisen, Mangan, Bor, Kupfer, Kobalt, Molybdan und Zink verwendet werden

Die Formulierungen enthalten im Allgemeinen zwischen 0.1 und 95 Gewichtsprozent Wirkstoffmischung, vorzugsweise zwischen 2 und 75 Gewichtsprozent.

Gegenstand der vorliegenden Erfindung sind weiterhin mikrobizide Mittel auf Basis der erfindungsgemaßen koazervierten Iodpropargylverbmdungen, enthaltend mindestens ein Lösungs- oder Verdünnungsmittel sowie gegebenenfalls Verarbeitungshilfsmittel und gegebenenfalls weitere antimikrobiell wirksame Stoffe Hierbei können die Wirkstoffe hierin entweder in geloster Form vorliegen oder als Suspensionen oder Emulsionen. Die Losungs- oder Verdünnungsmittel sind entweder Wasser oder alle gebrauchlichen organischen Lösungsmittel

Die Wirksamkeit und das Wirkungsspektrum von koazervierte Iodpropargylverbindungen bzw der daraus herstellbaren Mittel und Vorprodukte (z.B. Masterbatches) oder ganz allgemein Formulierungen können erhoht werden, wenn gegebenenfalls weitere antimikrobiell wirksame Verbindungen, Fungizide, Bakterizide, Herbizide, Insektizide, Algizide oder andere Wirkstoffe zur Vergrößerung des Wirkungsspektrums oder Erzielung besonderer Effekte wie z B des zusatzlichen Schutzes vor Insekten zugesetzt werden Diese Wirkstoffe können in der Mischung gegebenenfalls ebenfalls in koazervierter Form vorliegen.

Diese Mischungen können ein breiteres Wirkungsspektrum besitzen als die erfindungsgemäßen Verbindungen.

In vielen Fallen erhalt man dabei synergistische Effekte, d.h die Wirksamkeit der Mischung aus koazervierten Iodpropargylverbindungen und einem oder mehreren weiteren Wirkstoffen ist großer als die Wirksamkeit der Einzelkomponenten. Besonders günstige Mischungspartner sind z B. die folgenden Verbindungen:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutnafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Tnadimefon, Tnadimenol, Triapenthenol, Triflumizol, Triticonazol, Uniconazol sowie deren Metallsalze und Saureaddukte,
Imidazole wie
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Saureaddukte,
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlorfluanid, Tolylfluanid, Folpet, Fluorfolpet; Captan, Captofol;
Benzimidazole wie:
   Carbendazim, Benomyl, Fubendazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z B. p-Toluolsulfonsäure und p-Dodecylphenylsulfonsaure,
Benzthiazole wie:
   2-Mercaptobenzothiazol;
Benzthiophendioxide wie:
   Benzo[b]thiophen-S,S-dioxid-carbonsaurecyclohexylamid;
Benzamide wie.
   2,6-Dichloro-N-(4-trifluoromethylbenzyl)-benzamid, Tecloftalam;
Borverbindungen wie:
   Borsaure, Borsäureester, Borax;
Formaldehyd und Formaldehydabspaltende Verbindungen wie.
   Benzylalkoholmono-(poly)-hemiformal, 1,3-Bis(hydroxymethyl)-5,5-dimethylmidazolidine-2,4-dione (DMDMH), Bisoxazolidine, n-Butanol-hemiformal, Cis 1-(3-Chlorallyl)-3;5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylolharnstoff, 4,4-Dimethyl-oxazoldine, Ethylenglycolhemiformal, 7-Ethylbicyclooxazolidine, Hexa-hydro-S-triazine, Hexamethylentetramin, N-Hydroxymethyl-N'-methylthioharnstoff, Methylenbismorpholin, Natrium N-(Hydroxymethyl)-glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD),
Isothiazolinone wie
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie
   Zimtaldehyd, Formaldehyd, Glutardialdehyd, β-Bromzimtaldehyd, o-Phthaldialdehyd,
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Iodderivate wie
   Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-hexylcarbamat, 3-Iod-2-propinyl-cyclohexylcarbamat, 3-Iod-2-propinyl-phenylcarbamat;
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesauremethylester, p-Hydroxybenzoesaureethylester, p-Hydroxybenzoesaurepropylester, p-Hydroxybenzoesaurebutylester, p-Hydroxybenzoesaureoctylester ,o-Phenylphenol, m-Phenylphenol, p-Phenylphenol, 4-(2-tert.-Butyl-4-methyl-phenoxy)-phenol, 4-(2-Isopropyl-4-methylphenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlotsäure, Phenyl-(2-chlor-cyan-vinyl)sulfon, Phenyl-(1,2-dichlor-2-cyanvinyl)sulfon, Trichlorisocyanursaure;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Tnfloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2),
Metallseifen wie:
   Salze der Metalle Zinn, Kupfer und Zink mit höheren Fett-, Harz-, Naphthensauren und Phosphorsaure wie z.B. Zinn-, Kupfer-, Zinknaphtenat, -octoat, 2-ethylhexanoat, -oleat, -phosphat, -benzoat,
Metallsalze wie
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z B Tributylzmnoxid, Cu₂O, CuO, ZnO;
Oxidationsmittel wie:
   Wasserstoffperoxid, Peressigsaure, Kalium-persulfat,
Dithiocarbamate wie
   Cufraneb, Ferban, Kalium-N-hydroxymethyl-N'-methyl-dithiobarbamat, Na- oder K-dimethyl-dithiocarbamat, Macozeb, Maneb, Metam, Metiram, Thiram, Zineb, Ziram,
Nitrile wie:
   2,4,5,6-Tetrachlorisophthalodinitril, Dinatrium-cyano-dithioimidocarbamat,
Chinoline wie:
   8-Hydroxychinolin und deren Cu-Salze,
sonstige Fungizide und Bakterizide wie:
   Bethoxazin, 5-Hydroxy-2(5H)-furanon, 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsaurechlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumol, Phenoxyethanol,
   Ag, Zn oder Cu-haltige Zeolithe allem oder eingeschlossen in polymere Werkstoffe
Ganz besonders bevorzugt sind Mischungen mit
   Azaconazol, Bromuconazol, Cyproconazol, Dichlobutrazol, Diniconazol, Diuron, Hexaconazol, Metaconazol, Penconazol, Propiconazol, Tebuconazol, Triadimefon, Dichlofluanid, Tolylfluanid, Fluorfolpet, Methfuroxam, Carboxin, Benzo[b]thiophen-S,S-dioxid-carbonsaurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methylisothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadme, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), , Ethylenglycol-hemiformal, p-Hydroxybenzoesaure, Carbendazim, Chlorophen, 3-Methyl-4-chlorphenol, o-Phenylphenol.
   Desweiteren werden neben den oben genannten Fungiziden und Bakteriziden auch gut wirksame Mischungen mit anderen Wirkstoffen hergestellt:
   Insektizide / Akarizide / Nematizide
   Abamectm, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
   Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Ethofenprox, Etrimphos, Etoxazole, Etobenzanid,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypynm, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
   Halofenocid, HCH (CAS RN. 58-89-9), Heptenophos, Hexaflumuron, Hexythiazox, Hydramethylnon, Hydropren,
   Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin,
   Kadednn
   Lambda-Cyhalothrin, Lufenuron,
   Malathion. Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NI 125, Nicotin, Nitenpyram, Noviflumuron,
   Omethoat, Oxamyl, Oxydemethon M, Oxydeprofos,
   Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natnum
   Quinalphos,
   Resmethrin, Rotenon,
   Salithion, Sebufos, Silafluofen, Spinosad, Spirodiclofen, Spiromesifen, Sulfotep, Sulprofos,
   Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiaclopnd, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Tnarathen, Triazophos, Triazamate, Triazuron, Trichlorfon, Triflumuron, Trimethacarb,
   Vamidothion, Xylylcarb, Zetamethrin;
Molluscizide:
   Fentinacetat, Metaldehyd, Methiocarb, Niclosamid;
Herbizide und Algizide:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
   Benazolin, Benfluralin, Benfuresat, Bensulfuron, Bensulfid, Bentazon, Benzofencap, Benzthiazuron, Bifenox, Bispyribac, Bispynbac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
   Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cmofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron.
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazin, Endothal, EPTC, Esprocarb, Ethalfluralin, Ethidimuron, Ethofumesat, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralm, Flufenacet Flumeturon, Fluorocglycofen, Fluoronitrofen, Flupropanate, Flurenol, Fluridone, Flurochloridone, Fluroxypyr, Fomesafen, Fosamine, Fosametme, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
   Glyphosate, Glufosinate-ammonium
   Haloxyfop, Hexazinon,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
   Naproanilid, Naproparmid, Naptalam, Neburon, Nicosulfuron, Norflurazon, Natriumchlorat,
   Oxadiazon, Oxyfluorfen, Oxysulfuron, Orbencarb, Oryzalm, Oxadiargyl,
   Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsaure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teerole, TCA, TCA-Natnum, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thiadiazimin, Thiazopyr, Triflusulfuron,
   Vernolat.

Die Gewichtsverhältnisse der Wirkstoffe in diesen Wirkstoffkombinationen können in relativ großen Bereichen variiert werden.

Vorzugsweise ist das Verhaltnis von koazervierter Iodpropargylverbindung zu den Mischpartnern im allgemeinen zwischen 50:1 und 1:50, bevorzugt in einem Verhätnis von 20:1 bis 1 20 und besonders bevorzugt in einem Verhaltnis von 10:1 1 bis 1.10 vor

Die Mischungen können entweder dadurch erhalten werden, dass man sie bereits vor der Koazervierung mit einander vermischt und dann gemeinsam koazerviert, was bedeutet, dass alle Wirkstoffe der Mischung koazerviert sind. Es ist aber auch möglich die festen oder flüssigen Wirkstoffe zu den bereits koazervierten Iodpropargylverbindungen zu geben oder umgekehrt. Die Mischpartner können aber auch für sich formuliert sein, beispielsweise als Emulsionen, Suspensionen oder Losungen und dann mit den Koazervaten gemischt werden Um die Koazervate nicht wieder zu zerstoren, sind hohe Scherkrafte, wie sie beispiel welse bei der Mahlung auftreten zu vermeiden.

Die zum Schutz der technischen Materialien verwendeten mikrobiziden Mittel, Fomulierungen oder Konzentrate enthalten die koazervierten Iodpropargylverbindungen bzw die Mischungen von koazervierten Iodpropargylverbindungen mit anderen Wirkstoffen in einer Konzentration von 0,01 bis 95 Gew -%, insbesondere 0,1 bis 60 Gew -% .

Die Anwendungskonzentrationen der zu verwendenden koazervierten Iodpropargylverbindungen bzw. der Kombinationen richtet sich nach der Art und dem Vorkommen der zu bekampfenden Mikroorganismen sowie nach der Zusammensetzung des zu schutzenden Materials Die optimale Einsatzmenge kann durch Testreihen ermittelt werden Im allgemeinen hegen die Anwendungskonzentrationen im Bereich von 0,001 bis 5 Gew -%, vorzugsweise von 0,05 bis 2,0 Gew -%, bezogen auf das zu schützende Material.

Die folgenden Beispiele dienen zur Erlauterung der vorliegenden Erfindung ohne diese jedoch darauf zu beschranken Bei den Prozentangaben handelt es sich stets um Gewichtsprozent, es sei denn es ist ausdrücklich eine andere Einheit angegeben.

### Beispiele:

### Beispiel 1

### (Nicht erfindungsgemäßes Vergleichsbeispiel für eine Dispersion von IPBC in Wasser ohne Koazervierung)

In einem Becherglas wurden 20g Suspension, bestehend 19,8g Wasser und 0,2g mikronisiertes IPBC (1% bezogen auf Suspension), vorgelegt. Die Dispergierung erfolgte mittels eines Ultraturraxes bei ca. 9000 min⁻¹ und einer Dispergierzeit von 2 Minuten. Die Dispersion wurde bei 40 °C gelagert. Um mikroskopische Veränderungen der Probe während der Lagerung feststellen zu können, wurde sie in regelmäßigen Abstanden lichtmikroskopisch untersucht Nach 5 Tagen bei 40 °C wurd bereits deutliches Kristallwachstum beobachtet.

### Beispiel 2

(Nicht erfindungsgemäßes Vergleichsbeispiel, Dispersion von IPBC mit Mowiol 18-88, partiell hydrolysiertes Polyvinylacetat, analog WO 00/57702)

In einem Becherglas wurden 20,52g Suspension, bestehend aus 17,4g Wasser, 2,6g mikronisiertem IPBC (12,7% bezogen auf Suspension) und 0,52g Mowiol 18-88 (1% bezogen auf Wirkstoff), vorgelegt Die Dispergierung erfolgte mittels eines Ultraturraxes bei ca 9000 min⁻¹ und einer Dispergierzeit von 2 Minuten. Die Probe wurd bei 40 °C gelagert. Um mikroskopische Veränderungen der Probe während der Lagerung feststellen zu können, wurde sie in regelmäßigen Abstanden lichtmikroskopisch untersucht. Nach 7 Tagen bei 40 °C wurde leichtes Kristallwachstum beobachtet.

### Beispiel 3

### (Einfache Koazervierung von IPBC, Einarbeitung von Eiswasser in die Formulierung, runde Aggregate)

Zu 24 g destilliertem Wasser wurden 1,8 g einer warmen 25 %igen Gelatine-Losung (Gelita Bloom 300 Pharma, Typ A-Gelatine der Firma Stoess) gegeben Dazu gab man 1,2 g Natriumchlorid-Losung (1 molar) und 1 g IPBC. Die Probe wurde mit Hilfe eines Magnetrührers mit Heizung auf eine Temperatur von ca 40 °C erwärmt Nach erreichen der gewünschten Temperatur erfolgte eine pH-Einstellung auf ca. 4,5 (mit einer 0,1 molaren HCl-Losung) Die Suspension wurde nun in einem 85 °C heißem Wasserbad (Magnetruhrer) auf ca 65 °C erhitzt. Wenn das IPBC in flussiger Form vorlag, erfolgte noch ein kurzer Dispergierschritt mit einem Ultraturrax mit Emulsionsstab (1 min bei 9000 UPM). Während der Dispergierung wurden sehr schnell 120 g Eiswasser hinzugegeben Nach Zugabe des Eiswassers wurde ca 30 Sekunden nachgeruhrt (Ultraturrax bei 9000 UPM). Zum Schluss wurde die Probe ca. 2 Stunden im Eisbad unter leichtem Ruhren gekühlt

Um mikroskopische Veränderungen der Probe während der Lagerung feststellen zu können, wurde sie in regelmäßigen Abstanden lichtmikroskopisch untersucht Nach 2 Wochen bei 40 °C wurde kein signifikantes Kristallwachstum beobachtet.

Die Probe wurde auf die Bioverfügbarkeit des Wirkstoffes IPBC getestet (siehe Beispiel 9) Die biologische Wirksamkeit im Anstrich zeigte keinen signifikanten Unterschied zu direkt eingearbeitetem IPBC.

### Beispiel 4

### (Einfache Koazervierung von IPBC, Einarbeitung der Formulierung in Eiswasser, kleine Teilchen)

Zu 24 g destillieitem Wasser wurden 1,8 g einer warmen 25 %igen Gelatine-Lösung (Gelita Bloom 300 Pharma, Typ A-Gelatine der Firma Stoess) gegeben. Dazu gab man 1 g IPBC Die Probe wurde mit Hilfe eines Magnetrührers mit Heizung auf eine Temperatur von ca. 40 °C erwarmt. Nach erreichen der gewünschten Temperatur erfolgte eine pH-Einstellung auf ca. 4,5 (mit einer 0,1 molaren HCl-Losung). Die Suspension wurde nun in einem 85 °C heißem Wasserbad (Magnetruhrer) auf ca. 65 °C erhitzt. Wenn der Wirkstoff in flussiger Form vorlag, erfolgte noch eme Dispergierung mit einem Ultraschallfinger (Branson 250D, Ultraschallfinger 5 mm 2*15 sek bei 35 %) 85 g Eiswasser wurden in einem Becherglas vorgelegt. Die Zugabe der heißen Emulsion erfolgte durch langsames Zutropfen. Dabei wurde die Vorlage mittels Ultraturrax mit einem Emulsionsstab homogenisiert (bei 9000 UPM). Nach Zugabe des Eiswassers wurde ca. 30 Sekunden nachgeruhrt (Ultraturrax bei 9000 UPM). Zum Schluß wurde die Probe ca. 2 Stunden im Eisbad unter leichtem Rühren gekühlt

Um mikroskopische Veränderungen der Probe während der Lagerung feststellen zu können, wurde sie in regelmäßigen Abstanden lichtmikroskopisch untersucht. Nach 2 Wochen bei 40 °C wurde kein signifikantes Kristallwachstum gefunden

Die Probe wurde auf die Bioverfugbarkeit des Wirkstoffes IPBC getestet (siehe Beispiel 9). Die biologische Wirksamkeit im Anstrich zeigte keinen signifikanten Unterschied zu direkt eingearbeitetem IPBC.

### Beispiel 5

### (komplexe Koazervierung von IPBC)

Zu 24 g destilliertem Wasser wurden 1,8 g einer warmen 25 %igen Gelatine-Losung (Gelita Bloom 300 Pharma, Typ A-Gelatine der Firma Stoess) gegeben Dazu gab man 1 g IPBC Die Probe wurde mit Hilfe eines Magnetrührers mit Heizung auf eine Temperatur von ca. 40 °C erwärmt. Nach erreichen der gewünschten Temperatur erfolgte eine pH-Einstellung auf ca 4,5 (mit einer 0,1 molaren HCl-Losung). Die Suspension wur nun in einem 85 °C heißem Wasserbad (Magnetruhrer) auf ca. 65 °C erhitzt. Wenn der Wirkstoff in flüssiger Form vorlag erfolgte noch eine Dispergierung mit einem Ultraschallfinger (Branson 250D, Ultraschallfinger 5 mm 2*15 sek bei 35 %) 170 g Eiswasser wurden in einem Becherglas vorgelegt. Die Zugabe der heißen Emulsion erfolgte durch langsames Zutropfen. Dabei wurde die Vorlage mittels Ultraturrax mit einem Emulsionsstab homogenisiert (bei 9000 UPM). Nach Zugabe des Eiswassers wurde ca. 30 Sekunden nachgeruhrt (Ultraturrax bei 9000 UPM) und anschließend ca. 30 Minuten im Eisbad gekühlt (leichtes Rühren) Vor der Zugabe von 8,3 g Gummi Arabicum (3 %ig in Wasser) erfolgte eine pH-Anderung auf ca 10 mittels 0,5 molarer NaOH. Die Probe wurde auf eine Temperatur von 45 °C erwarmt. Dann gab man 1 g einer warmen 25 %igen Gelatine-Losung (Gelita Bloom 300 Pharma, Typ A-Gelatine der Firma Stoess) hinzu. Unter starkem Ruhren mit einem Magnetruhrer wurde der pH-Wert langsam auf 4 eingestellt mittels 0,5 molarer HCl. Die Probe kuhlte bei RT unter Ruhren langsam bis zur Raumtemperatur ab Bei erreichen der Raumtemperatur erfolgte das Aushärten der Kapseln im Eisbad über einen Zeitraum von ca. zwei Stunden

Um mikroskopische Veränderungen der Probe während der Lagerung feststellen zu können, wurde sie in regelmäßigen Abstanden lichtmikroskopisch untersucht. Nach einer Woche bei 40 °C wurde kein signifikantes Kristallwachstum beobachtet

Die Probe wurde auf die Bioverfugbarkeit des Wirkstoffes IPBC getestet Die biologische Wirksamkeit zeigte keinen signifikanten Unterschied zu direkt eingearbeiteten IPBC (siehe Beispiel 9)

### Beispiel 6

### (Mischung aus IPBC, n-Octylisothiazolinon und Cybutryn, einfache Koazervierung mit Vernetzung)

Es wurde eine Suspension wie in Beispiel 3 beschrieben hergestellt Die Probe wurde anschließend ineiner Beckman-Zentrifuge J30 I zentrifugiert (2 min bei 2000 g) Nach Abtrennung des Uberstandes wurde in der Probe der Wirkstoffgehalt bestimmt und auf 13 % mit Wasser verdunnt. Zu 10 g der Suspension wurden dann 1,2 g einer 50 % igen Glutaraldehydlösung gegeben. Die Probe wurde dann bei RT für ca. 48 h geschüttelt Um das überschüssige Glutaraldehyd zu entfernen folgten mehrere Wasch- und Zentnfugationsschritte (2 min bei 2000 g) Nach dem letzten Waschschritt wurden 2,75 g Wasser abgezogen und 1,75 g NOIT-Emulsion (20 %ig , 6 % Emulgator WN und 6 % Soprophor FL) und 1 g Cybutryn Suspension (50 %ig, 6 % Emulgator WN und 6 % Soprophor FL) zugegeben.

Anschließend wurde die Probe bei 40 °C in einem Schüttelwasserbad gelagert.

Um mikroskopische Veränderungen der Probe während der Lagerung feststellen zu können, wurde sie in regelmäßigen Abständen lichtmikroskopisch untersucht. Nach 28 Tagen Lagerung bei 40 °C wurde keine Heteroflokkulation beobachtet.

### Beispiel 7

### (Mischung aus IPBC, n-Octylisothiazolinon und Cybutryn, einfache Koazervierung mit Vernetzung, kleine Teilchen)

Eine Suspension wie in Beispiel 4 beschrieben wurde hergestellt. Die Probe wurde in einer Beckman-Zentnfuge J30 I zentrifugiert (2 min bei 2000 g) Nach Abtrennung des Uberstandes wurde in der Probe der IPBC Gehalt bestimmt und auf 13 % mit Wasser verdunnt Zu 10 g der Suspension wurden dann 1,2 g einer 50 %-igen Glutaraldehydlosung gegeben Die Probe wurde dann bei RT für ca 48 h geschüttelt. Um das überschüssige Glutaraldehyd zu entfernen folgten mehrere Wasch- und Zentrifugationsschritte (2 min bei 2000 g) Nach dem letzten Waschschritt wurden 2,75 g Wasser abgezogen und 1,75 g NOIT-Emulsion (20 %ig, 6% Emulgator WN und 6 % Soprophor FL) und 1 g Cybutryn-Suspension (50 %ig, 6% Emulgator WN und 6 % Soprophor FL) zugegeben. Anschließend wurde die Probe bei 40 °C in einem Schüttelwasserbad gelagert.

Um mikroskopische Veränderungen der Probe während der Lagerung feststellen zu können, wurde sie in regelmäßigen Abstanden lichtmikroskopisch untersucht. Nach 28 Tagen Lagerung bei 40 °C wurde keine signifikante Heteroflokkulation beobachtet.

### Beispiel 8

### (Mischung aus IPBC, n-Octylisothiazolinon und Cybutryn, komplexe Koazervierung mit Vernetzung, kleine Teilchen)

Eine Suspension wie in Beispiel 5 beschrieben wurde hergestellt Die Probe wurde in einer Beckman-Zentrifuge J30 I zentrifugiert (2 min bei 2000 g). Nach Abtrennung des Überstandes wurde in der Probe der IPBC Gehalt bestimmt und auf 13 % mit Wasser verdunnt Zu 10 g der Suspension wurden dann 1,2 g einer 50 %igen Glutaraldehydlosung gegeben Die Probe wurde bei RT für ca 48 h geschüttelt Um das überschüssige Glutaraldehyd zu entfernen folgten mehrere Wasch- und Zentrifugationsschritte (2 min bei 2000 g) Nach dem letzten Waschschritt wurden 2,75 g Wasser abgezogen und 1,75 g NOIT-Emulsion (20 %ig, 6% Emulgator WN und 6 % Soprophor FL) und 1 g Cybutryn-Suspension (50 %ig, 6% Emulgator WN und 6 % Soprophor FL) zugegeben Anschließend wurde die Probe bei 40 °C in einem Schuttelwasserbad gelagert

Um mikroskopische Veränderungen der Probe während der Lagerung feststellen zu können, wurde sie in regelmäßigen Abstanden lichtmikroskopisch untersucht. Nach 28 Tagen Lagerung bei 40 °C wurde keine Heteroflokkulation beobachtet.

### Beispiel 9

### (Anstrichprüfungen)

Der zu prufende Stoff wurde in der angegebenen Konzentration mit einem Dissolver in die zu prufende Farbe eingearbeitet.

Zur Prufung dei Dispersionsanstriche auf Schimmelfestigkeit wurde wie folgt verfahren.

Das zu prufende Anstrichmittel wurde beidseitig auf eine geeignete Unterlage gestrichen. Um praxisnahe Ergebnisse zu erhalten, wurde ein Teil der Prüflinge vor dem Test auf Schimmelfestigkeit mit fließendem Wasser (24 h, 20°C) ausgelaugt, ein weiterer Teil wurde mit einem warmen Fnschluftstrom behandelt (7 Tage, 40°C).

Die so vorbereiteten Proben wurden daraufhin auf einen Agar-Nahrboden gelegt und sowohl Proben als auch Nahrboden mit Pilzsporen kontaminiert. Nach 2- 3-wöchiger Lagerung (29 ± 1 °C, 80-90% rel. Luftfeuchte) wurde abgemustert

Der Anstrich wird dann als dauerhaft schimmelfest eingestuft, wenn die Probe pilzfrei bleibt oder höchstens einen genngen Randbefall erkennen lässt.

Zur Kontamination wurden Pilzsporen folgender Schimmelpilze verwendet, die als Anstnchzerstorer bekannt sind oder haufig auf Anstnchen angetroffen werden:
Alternaria tennis
Aspergillus flavus
Aspergillus niger
Aspergillus ustus
Cindosporum herbarum
Paecilomyces variotii
Penicillium citrium
Aureobasidium pullulans
Stachybotrys chartarum

Schimmelfest waren ohne Auslaugung und Windkanalexposition die Anstriche gemaß Rezeptur A, die 0.08 % (bezogen auf Feststoffanteil der Dispersionsfarbe) reines IPBC oder koazerviertes IPBC der Beispiele 3, 4 und 5 enthielten. Nach Auslaugung und Windkanalexposition waren die Anstriche gemaß Rezeptur A wirksam, die 0,16 % (bezogen auf Feststoffanteil der Dispersionsfarbe) reines IPBC oder koazerviertes IPBC der Beispiele 3, 4 und 5 enthielten

### Rezeptur A: Außendispersionsfarbe auf Basis von Acroal 290 D (Styrolacrylat)

| **Handelsname** | ***Gew.-Teile*** | ***Chemische Bezeichnung*** |
|---|---|---|
| Bayer Titan RKB2 | 40 | Titandioxid |
| Talkum V58 neu | 10 | Magnesiumsilikat wasserhaltig |
| Durcal 5 | 45 | Calcit CaCO₃ |
| Walsroder MC 3000 S 2 %ig | 30 | Methylcellulose |
| H₂O | 6,5 | Destilliertes Wasser |
| Calgon N 10 %ig | 3 | Polyphosphat |
| Pigmentverteiler A 10 %ig | 1 | Polyacrylsauresalz |
| Agitan 281, 1:1 in Texanol | 1 | |
| Testbenzin | 5 | Gemisch aliph. Kohlenwasserstoffe |
| Butylglykolacetat | 1.5 | Butylglykolacetat |
| Acronal 290 D (Bindemittel) | 71 | Polyacrylsäureester |
| **Gesamt** | **219** | |

Feststoffgehalt 135,5 = 61,6%.

## Patentansprüche

1. Verfahen zur Koazervierung von Iodpropargylverbindungen, **dadurch gekennzeichnet, dass** man
a) eine wassrige Lösung eines oder mehrerer hydrophiler Kolloide mit mindestens einer Iodpropargylverbindung vermischt und
b) durch Zugabe von Koazervierungshilfsmitteln und/oder durch Änderung der Umgebungsbedingungen der Reaktionsmischung die hydrophilen Kolloide auf der Partikeloberfläche der Iodpropargylverbindungen ausfallt oder abscheidet und
c) gegebenenfalls die Koazervathullen der so hergestellten koazervierten - Iodpropargylverbindungen vernetzt.

2. Verfahren gemäß Anspruch 1, **dadurch gekennzeichnet, dass** als hydrophile Kolloide Gelatine, Agar-Agar, Albumin, Cellulosederivate, Carragenan, Chitosan, Sojaprotein, Polyvinylalkohol, Gliadin, Stärke, oder die Kombinationen aus Gelatine/Gummi Arabicum, Gelatine/Acacia, Gelatine/Pectin, Gelatine/Carbopol, Heparin/Gelatine, Gelatine/Carboxymethylcellulose, B-Lactoglobulin/Gummi Arabicum oder Guar/Dextran eingesetzt werden. ,

3. Verfahren gemaß wenigstens einem der Anspruche 1 und 2, **dadurch gekennzeichnet, dass** Schritt a) bei einem pH-Wert im Bereich von 3 bis 5 durchgeführt wird

4. Verfahren gemaß wenigstens einem der Anspruche 1 bis 3, **dadurch gekennzeichnet, dass** in Schritt a) die Iodpropargylverbindung in einer Menge von 0,5 bis 50 Gew.-% bezogen auf die wassrige Lösung eines oder mehrerer hydrophiler Kolloide eingesetzt wird

5. Verfahren gemaß wenigstens einem der Anspruche 1 bis 4, **dadurch gekennzeichnet, dass** in Schritt a) die Konzentration des hydrophilen Kolloides in der wassngen Losung 0,05 bis 30 Gew -% beträgt.

6. Verfahren gemäß wenigstens einem der Anspruche 1 bis 5, **dadurch gekennzeichnet, dass** Schritt a) bei einer Temperatur von 0 bis 90 °C erfolgt.

7. Verfahren gemaß wenigstens einem der Anspruche 1 bis 6, **dadurch gekennzeichnet, dass** in Schritt b) als Koazervierungshilfsmittel Salze, Polyelekrolyte, Alkohole, Aceton und Polyethylenglykol oder deren Kombinationen eingesetz werden

8. Verfahren gemaß wenigstens einem der Anspruche 1 bis 7, **dadurch gekennzeichnet, dass** in Schritt b) die Änderung der Umgebungsbedingungen der Reaktionsmischung durch Erhöhung des pH-Wertes auf ≥ 10 und/oder durch Erniedrigung dei Temperatur auf -5 bis 10 °C erfolgt

9. Verfahren gemaß wenigstens einem der Anspruche 1 bis 8, **dadurch gekennzeichnet, dass** als Iodpropargylverbindung 3-Iod-2-propynyl-propyl-carbamat, 3-Iod-2-propinyl-butyl-carbamat (IPBC), 3-Iod-2-propinyl-m-chlorphenylcarbamat, 3-Iod-2-propinyl-phenylcarbamat, 3-Iod-2-propinyl-2,4,5-trichlorphenylether, 3-Iod-2-propinyl-4-chlor-phenylformal (IPCF), Di-(3-Iod-2-propinyl)hexyldicarbamat, 3-Iod-2-propinyloxyethanol-ethyl-carbamat, 3-Iod-2-propinyl-oxyethanol-phenyl-carbamat, 3-Iod-2-propinyl-thioxo-thio-ethyl carbamat, 3-Iod-2-propinyl-carbaminsäureester (IPC), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 4-Chlorphenyl-3-iodpropargylformal, 3-Iod-2-propinyl-n-hexylcarbamat, 3-Iod-2-propinyl-cyclohexylcarbamat oder deren Mischungen eingesetz werden

10. Verfahren gemaß wenigstens einem der Ansprüche 1 bis 9, **dadurch gekennzeichnet, dass** in Schritt c) die Vernetzung durch Umsetzung mit mindestens einem Aldehyd erfolgt.

11. Koazerviete Iodpropargylverbindungen erhältlich nach dem Verfahren gemäß wenigstens einem der Anspruche 1 bis 10.

12. Mikrobizide Mittel enthaltend wenigstens eine koazervierte Iodpropargylverbindung gemaß Anspruch 11, mindestens ein Lösungs- oder Verdünnungsmittel sowie gegebenenfalls Verarbeitungshilfsmittel und gegebenenfalls weitere antimikrobiell wirksame Stoffe.

13. Verwendung von koazervierten Iodpropargylverbindungen gemaß Anspruch 11 oder Mitteln gemaß Anspruch 12 zum Schutz von technischen Materialien vor Befall und/oder Zerstorung durch Mikroorganismen.

14. Stabile wassrige Dispersionen enthaltend mindestens eine koazervierte Iodpropargylverbindung gemaß Anspruch 11.

15. Mischungen enthaltend mindestens eine koazervierte Iodpropargylverbindung gemaß Anspruch 11 und mindestens einen weiteren bioziden Wirkstoff aus der Reihe der Fungizide, Bakterizide, Herbizide, Insektizide, Algizide.

16. Verfahren zur Herstellung einer Mischung gemaß Anspruch 15, **dadurch gekennzeichnet, dass** man
a) eine wässrige Losung eines oder mehrerer hydrophiler Kolloide mit mindestens einer Iodpropargylverbindung und mindestens einem weiteren bioziden Wirkstoff aus der Reihe der Fungizide, Bakterizide, Herbizide, Insektizide, Algizide vermischt und
b) durch Zugabe von Koazervierungshilfsmitteln und/oder durch Änderung der Umgebungsbedingungen der Reaktionsmischung die hydrophilen Kolloide auf der Partikeloberflache der Iodpropargylverbindungen und bioziden Wirkstoffe ausfällt oder abscheidet und
c) gegebenenfalls die Koazervathullen der so hergestellten Mischung aus koazervierten Iodpropargylverbindungen und bioziden Wirkstoffen vernetzt

17. Verfahren zur Herstellung einer Mischung gemäß Anspruch 15, **dadurch gekennzeichnet, dass** man mindestens einen bioziden Wirkstoff aus der Reihe der Fungizide, Bakterizide, Herbizide, Insektizide, Algizide in fester oder flüssigerForm oder gegebenenfalls als Suspension oder Emulsion mit den bereits koazervierten Iodpropargylverbindungen in beliebiger Reihenfolge vermischt.

18. Technische Materialien enthaltend mindestens eine koazervierten Iodpropargylverbindung gemaß Anspruch 11.

## Claims

1. Process for coacervating iodopropargyl compounds, **characterized in that**
a) an aqueous solution of one or more hydrophilic colloids is mixed with at least one iodopropargyl compound and
b) by adding coacervating aids and/or by changing the ambient conditions of the reaction mixture, the hydrophilic colloids are precipitated or deposited on the particle surface of the iodopropargyl compounds, and
c) if desired, the coacervate shells of the coacervated iodopropargyl compounds thus prepared are crosslinked.

2. Process according to Claim 1, **characterized in that** hydrophilic colloids used are gelatin, agar-agar, albumin, cellulose derivatives, carraghenan, chitosan, soy protein, polyvinyl alcohol, gliadin, starch, or the combinations of gelatin/gum arabic, gelatin/acacia, gelatin/pectin, gelatin-carbopol, heparin/gelatin, gelatin/carboxymethylcellulose, B-lactoglobulin/gum arabic or guar/dextran.

3. Process according to at least one of Claims 1 and 2, **characterized in that** step a) is carried out at a pH in the range from 3 to 5.

4. Process according to at least one of Claims 1 to 3, **characterized in that** in step a) the iodopropargyl compound is used in an amount of 0.5% to 50% by weight, based on the aqueous solution of one or more hydrophilic colloids.

5. Process according to at least one of Claims 1 to 4, **characterized in that** in step a) the concentration of the hydrophilic colloid in the aqueous solution is 0.05% to 30% by weight.

6. Process according to at least one of Claims 1 to 5, **characterized in that** step a) takes place at a temperature of 0 to 90°C.

7. Process according to at least one of Claims 1 to 6, **characterized in that** in step b) coacervation aids used are salts, polyelectrolytes, alcohols, acetone, and polyethylene glycol or combinations thereof.

8. Process according to at least one of Claims 1 to 7, **characterized in that** in step b) the change in the ambient conditions of the reaction mixture takes place by raising of the pH to ≥ 10 and/or by lowering of the temperature to -5 to 10°C.

9. Process according to at least one of Claims 1 to 8, **characterized in that** use is made as iodopropargyl compound of 3-iodo-2-propynyl propylcarbamate, 3-iodo-2-propynyl butylcarbamate (IPBC), 3-iodo-2-propynyl m-chlorophenylcarbamate, 3-iodo-2-propynyl phenylcarbamate, 3-iodo-2-propynyl-2,4,5-trichlorophenyl ether, 3-iodo-2-propynyl 4-chlorophenyl formal (IPCF), di(3-iodo-2-propynyl)hexyl dicarbamate, 3-iodo-2-propynyloxyethanol ethylcarbamate, 3-iodo-2-propynyloxyethanol phenylcarbamate, 3-iodo-2-propynyl thioxothioethylcarbamate, 3-iodo-2-propynylcarbamic esters (IPC), N-iodopropargyloxycarbonylalanine, N-iodopropargyloxycarbonylalanine ethyl ester, 3-(3-iodopropargyl)benzoxazol-2-one, 3-(3-iodopropargyl)-6-chlorobenzoxazol-2-one, 4-chlorophenyl 3-iodopropargyl formal, 3-iodo-2-propynyl n-hexylcarbamate, 3-iodo-2-propynyl cyclohexylcarbamate or mixtures thereof.

10. Process according to at least one of claims 1 to 9, **characterized in that** in step c) the crosslinking takes place by reaction with at least one aldehyde.

11. Coacervated iodopropargyl compounds obtainable by the process according to at least one of Claims 1 to 10.

12. Microbicidal compositions comprising at least one coacervated iodopropargyl compound according to Claim 11, at least one solvent or diluent, and also, if desired, processing auxiliaries and, if desired, further antimicrobial compounds.

13. Use of coacervated iodopropargyl compounds according to Claim 11 or compositions according to Claim 12 for protecting industrial materials from infestation and/or destruction by microorganisms.

14. Stable aqueous dispersions comprising at least one coacervated iodopropargyl compound according to Claim 11.

15. Mixtures comprising at least one coacervated iodopropargyl compound according to Claim 11 and at least one further biocidial active from the series consisting of fungicides, bactericides, herbicides, insecticides, and algicides.

16. Process for preparing a mixture according to Claim 15, **characterized in that**
a) an aqueous solution of one or more hydrophilic colloids is mixed with at least one iodopropargyl compound and at least one further biocidal active from the series consisting of fungicides, bactericides, herbicides, insecticides, and algicides, and
b) by adding coacervating aids and/or by changing the ambient conditions of the reaction mixture, the hydrophilic colloids are precipitated or deposited on the particle surface of the iodopropargyl compounds and biocidal actives, and
c) if desired, the coacervate shells of the thus-prepared mixture of coacervated iodopropargyl compounds and biocidal actives are crosslinked.

17. Process for preparing a mixture according to Claim 15, **characterized in that** at least one biocidal active from the series consisting of fungicides, bactericides, herbicides, insecticides, and algicides in solid or liquid form or, where appropriate, as a suspension or emulsion is mixed with the iodopropargyl compounds already coacervated, in any desired order.

18. Industrial materials comprising at least one coacervated iodopropargyl compound according to Claim 11.

## Revendications

1. Procédé pour la coacervation de composés d'iodopropargyle, **caractérisé en ce qu'**on
a) mélange une solution aqueuse d'un ou de plusieurs colloïdes hydrophiles avec au moins un composé d'iodopropargyle et
b) précipite ou dépose les colloïdes hydrophiles sur la surface des particules des composés d'iodopropargyle par addition d'adjuvants de coacervation et/ou par modification des conditions ambiantes du mélange réactionnel et
c) réticule le cas échéant les enveloppes de coacervat des composés d'iodopropargyle coacervés ainsi préparés.

2. Procédé selon la revendication 1, **caractérisé en ce qu'**on utilise, comme colloïdes hydrophiles, de la gélatine, de l'agar-agar, de l'albumine, des dérivés de cellulose, du carraghénane, du chitosane, des protéines de soja, du poly(alcool vinylique), de la gliadine, de l'amidon ou les combinaisons de gélatine/gomme arabique, gélatine/acacia, gélatine/pectine, gélatine/carbopol, héparine/gélatine, gélatine/carboxyméthylcellulose, B-lactoglobuline/gomme arabique ou gomme guar/dextrane.

3. Procédé selon au moins l'une quelconque des revendications 1 et 2, **caractérisé en ce que** l'étape a) est réalisée à un pH dans la plage de 3 à 5.

4. Procédé selon au moins l'une quelconque des revendications 1 à 3, **caractérisé en ce que**, dans l'étape a), le composé d'iodopropargyle est utilisé en une quantité de 0,5 à 50% en poids par rapport à la solution aqueuse d'un ou de plusieurs colloïdes hydrophiles.

5. Procédé selon au moins l'une quelconque des revendications 1 à 4, **caractérisé en ce que**, dans l'étape a), la concentration du colloïde hydrophile dans la solution aqueuse est de 0,05 à 30% en poids.

6. Procédé selon au moins l'une quelconque des revendications 1 à 5, **caractérisé en ce que** l'étape a) a lieu à une température de 0°C à 90°C.

7. Procédé selon au moins l'une quelconque des revendications 1 à 6, **caractérisé en ce que**, dans l'étape b), on utilise, comme adjuvants de coacervation, des sels, des polyélectrolytes, des alcools, de l'acétone et du polyéthylèneglycol ou leurs combinaisons.

8. Procédé selon au moins l'une quelconque des revendications 1 à 7, **caractérisé en ce que**, dans l'étape b), la modification des conditions ambiantes du mélange réactionnel a lieu par augmentation de la valeur du pH ≥ 10 et/ou par abaissement de la température à -5 jusqu'à 10°C.

9. Procédé selon au moins l'une quelconque des revendications 1 à 8, **caractérisé en ce qu'**on utilise, comme composé d'iodopropargyle, du 3-iodo-2-propynylpropylcarbamate, du 3-iodo-2-propynylbutylcarbamate (IPBC), du 3-iodo-2-propynyl-m-chlorophénylcarbamate, du 3-iodo-2-propynylphénylcarbamate, du 3-iodo-2-propynyl-2,4,5-trichlorophényléther, du 3-iodo-2-propynyl-4-chlorophénylformal (IPCF), du di-(3-iodo-2-propynyl)hexyldicarbamate, du 3-iodo-2-propynyloxyéthanoléthylcarbamate, du 3-iodo-2-propynyloxyéthanolphénylcarbamate, du 3-iodo-2-propynylthioxothioéthylcarbamate, un ester de l'acide 3-iodo-2-propynylcarbamique (IPC), de la N-iodopropargyloxycarbonylalanine, de l'ester éthylique de la N-iodopropargyloxycarbonylalanine, de la 3-(3-iodopropargyl)-benzoxazol-2-one, de la 3-(3-iodopropargyl)-6-chlorobenzoxazol-2-one, du 4-chlorophényl-3-iodopropargylformal, du 3-iodo-2-propynyl-n-hexylcarbamate, du 3-iodo-2-propynylcyclohexylcarbamate ou leurs mélanges.

10. Procédé selon au moins l'une quelconque des revendications 1 à 9, **caractérisé en ce que**, dans l'étape c), la réticulation a lieu par transformation avec au moins un aldéhyde.

11. Composés d'iodopropargyle coacervés, pouvant être obtenus selon le procédé selon au moins l'une quelconque des revendications 1 à 10.

12. Agents microbiocides contenant au moins un composé d'iodopropargyle coacervé selon la revendication 11, au moins un solvant ou diluant ainsi que le cas échéant des adjuvants de transformation et le cas échéant d'autres substances actives de manière antimicrobienne.

13. Utilisation de composés d'iodopropargyle coacervés selon la revendication 11 ou d'agents selon la revendication 12 pour la protection de matériaux techniques contre l'attaque et/ou la dégradation par des microorganismes.

14. Dispersions aqueuses stables contenant au moins un composé d'iodopropargyle coacervé selon la revendication 11.

15. Mélanges contenant au moins un composé d'iodopropargyle coacervé selon la revendication 11 et au moins une autre substance active biocide de la série des fongicides, des bactéricides, des herbicides, des insecticides, des algicides.

16. Procédé pour la préparation d'un mélange selon la revendication 15, **caractérisé en ce qu'**on
a) mélange une solution aqueuse d'un ou de plusieurs colloïdes hydrophiles avec au moins un composé d'iodopropargyle et au moins une autre substance active biocide de la série des fongicides, des bactéricides, des herbicides, des insecticides, des algicides et
b) précipite ou dépose les colloïdes hydrophiles sur la surface des particules des composés d'iodopropargyle et les substances actives biocides par addition d'adjuvants de coacervation et/ou par modification des conditions ambiantes du mélange réactionnel et
c) réticule le cas échéant les enveloppes de coacervat du mélange ainsi préparé de composés d'iodopropargyle et des substances actives biocides coacervés.

17. Procédé pour la préparation d'un mélange selon la revendication 15, **caractérisé en ce qu'**on mélange au moins une substance active biocide de la série des fongicides, des bactéricides, des herbicides, des insecticides, des algicides sous forme solide ou liquide ou le cas échéant sous forme de suspension ou d'émulsion avec les composés d'iodopropargyle déjà coacervés dans un ordre quelconque.

18. Matériaux techniques contenant au moins un composé d'iodopropargyle coacervé selon la revendication 11.
